# EUROPÄISCHE PATENTANMELDUNG

(11) **EP 1 355 395 A1**
(43) Veröffentlichungstag der Anmeldung: **22.10.2003**
(21) Anmeldenummer: 02008717.7
(22) Anmeldetag: 18.04.2002
(51) Int. Cl.: H02B 1/40

(54) **Zähler- und/oder Verteilergehäuse**

(71) Anmelder: Karl Kuklies GmbH, 47167 Duisburg (DE)
(72) Erfinder: Kuklies, Werner Matthias, 47167 Duisburg (DE)
(74) Vertreter: Rohmann, Michael, Dr.

(57) **Zusammenfassung**

Zähler- und/oder Verteilervorrichtung mit einer rückseitigen Plattform, an welche Plattform zwei Seitenwände, eine Bodenwand und eine obere Wand angeschlossen sind. Die beiden Seitenwände sind auf die Plattform aufgesteckt und mittels an den Verbindungsstellen zwischen Seitenwänden und Plattform vorgesehenen U-Profilen formschlüssig an die Plattform angeschlossen. Sowohl an den Seitenwänden als auch an der Plattform sind Rastelemente vorgesehen und die Seitenwände sind über Rastverbindungen an die Plattform angeschlossen.

## Beschreibung

Die Erfindung betrifft eine Zähler- und/oder Verteilervorrichtung mit einer rückseitigen Plattform, an welche Plattform zwei Seitenwände, eine Bodenwand und eine obere Wand angeschlossen sind. - Die rückseitige Plattform kann insbesondere an einer Wand befestigt werden. Bei der erfindungsgemäßen Zähler- und/oder Verteilervorrichtung handelt es sich insbesondere um eine Stromzähler- und/oder Stromverteilervorrichtung. Solche Vorrichtungen sind auch unter der Bezeichnung Zählerschränke bekannt. Zählerschränke werden vor allem in Gebäuden installiert und dienen dort der Messung des Stromverbrauchs sowie der vorgesehenen Verteilung des Stroms. Die Zählerschränke sind mit entsprechenden Zählerkomponenten und Verteilerkomponenten ausgerüstet, die an dem Zählerschrank fixiert sind.

Die aus der Praxis bekannten Zähler- und Verteilervorrichtungen bzw. die bekannten Zählerschränke werden in der Regel in sehr aufwendiger Weise montiert bzw. zusammengebaut. Bei einem aus der Praxis bekannten Zählerschrank werden die einzelnen Komponenten, das heißt die rückseitige Plattform und die Wände regelmäßig mit einer Mehrzahl von Befestigungsmitteln, wie Schrauben, Bolzen und dergleichen zusammengefügt bzw. verbunden. Diese Montage ist äußerst arbeitsaufwendig, materialaufwendig und kostenaufwendig. Ein anderer aus der Praxis bekannter Zählerschrank wird so montiert bzw. zusammengebaut, dass die einzelnen Komponenten, das heißt die rückseitige Plattform und die Wände miteinander verschweißt werden. Auch das ist sehr aufwendig. Die vorstehend erläuterten aus der Praxis bekannten Verbindungsmaßnahmen für die Komponenten der Zählerschränke werden für erforderlich gehalten, um einerseits eine feste und gegen mechanische Beanspruchungen resistente Verbindung zwischen den Komponenten zu erzielen und um andererseits auch eine möglichst dichte Verbindung zu erzeugen, damit beispielsweise Wasser in die Zählerschränke nicht eindringen kann. Die aus der Praxis bekannten Maßnahmen sind verbesserungsbedürftig.

Demgegenüber liegt der Erfindung das technische Problem zugrunde, eine Zähler- und/oder Verteilervorrichtung der eingangs genannten Art anzugeben, die einfach und wenig aufwendig montiert werden kann und sich nichtsdestoweniger durch ausgezeichnete Festigkeit bzw. Stabilität sowie auch durch Dichtigkeit gegenüber Flüssigkeiten auszeichnet.

Zur Lösung dieses technischen Problems lehrt die Erfindung eine Zähler- und/oder Verteilervorrichtung mit einer rückseitigen Plattform, an welche Plattform zwei Seitenwände, eine Bodenwand und eine obere Wand angeschlossen sind,
wobei die beiden Seitenwände auf die Plattform aufgesteckt sind und mittels an den Verbindungsstellen zwischen Seitenwänden und Plattform vorgesehenen U-Profilen formschlüssig an die Plattform angeschlossen sind
und wobei sowohl an den Seitenwänden als auch an der Plattform Rastelemente vorgesehen sind und die Seitenwände über Rastverbindungen an die Plattform angeschlossen sind.

Die Seitenwände sind senkrecht oder zumindest im Wesentlichen senkrecht zu der Plattform angeordnet. Es liegt im Rahmen der Erfindung, dass eine Tür für die erfindungsgemäße Zähler- und/oder Verteilervorrichtung vorgesehen ist und diese Tür an zumindest eine Seitenwand zweckmäßigerweise über Scharnierverbindungen angeschlossen ist. Die Seitenwände werden erfindungsgemäß lediglich auf die Plattform aufgesteckt bzw. aufgeschoben, so dass sich eine formschlüssige Verbindung ergibt. Dabei kann eine befestigungsfreie Verbindung zwischen Plattform und . Seitenwänden realisiert werden. Das heißt, dass der Anschluss der Seitenwände an die Plattform ohne separate Schrauben, Muttern, Bolzen und dergleichen erfolgt, sondern erfindungsgemäß über Rastverbindungen.

Es liegt im Rahmen der Erfindung, dass die Bodenwand und/oder die obere Wand auf die Plattform aufgesteckt ist und mittels an den Verbindungsstellen zwischen Bodenwand und/oder oberer Wand und der Plattform vorgesehenen U-Profilen formschlüssig an die Plattform angeschlossen ist und wobei sowohl an der Bodenwand und/oder an der oberen Wand als auch an der Plattform Rastelemente vorgesehen sind und die Bodenwand und/oder die obere Wand über Rastverbindungen an die Plattform angeschlossen ist. - Vorzugsweise ist sowohl die Bodenwand als auch die obere Wand in der vorstehend beschriebenen Weise an die Plattform angeschlossen. Damit werden dann alle vier Wände, das heißt die beiden Seitenwände, die Bodenwand und die obere Wand in der gleichen Art und Weise mit der Plattform verbunden, nämlich formschlüssig und über Rastverbindungen.

Der Erfindung liegt die Erkenntnis zugrunde, dass mit den erfindungsgemäßen Formschlussverbindungen in Kombination mit den Rastverbindungen eine sehr feste bzw. stabile und zugleich dichte Verbindung der Komponenten erzielt werden kann. Diese optimale Verbindung der Vorrichtungs- bzw. Gehäusekomponenten kann im Zuge einer einfachen und wenig aufwendigen Montage erreicht werden. Die Verbindung der Komponenten erfolgt dabei einerseits befestigungsmittelfrei, das heißt ohne dass zusätzliche Befestigungsmittel, wie Schrauben, Bolzen oder dergleichen erforderlich sind. Andererseits kann auch vollständig auf aufwendige Schweißverbindungen verzichtet werden. Die vier Wände, das heißt die Seitenwände, die Bodenwand und die obere Wand werden lediglich auf die Plattform aufgesteckt und zwar ohne zusätzliche Befestigungsmittel und ohne dass ein Schweißen erforderlich wäre. - Nach sehr bevorzugter Ausführungsform der Erfindung bestehen die Plattform, die Seitenwände, die Bodenwand und die obere Wand aus Metallblech. Dieses Material hat sich im Rahmen der Erfindung besonders bewährt.

Nach sehr bevorzugter Ausführungsform der Erfindung weisen die Seitenwände und/oder die Bodenwand und/oder die obere Wand an ihrer plattformseitigen Kante ein zumindest über einen Teil der Länge dieser plattformseitigen Kante verlaufendes plattformseitig offenes U-Profil auf, welches U-Profil ein am entsprechenden Plattformrand verlaufendes Formschlusselement formschlüssig überfasst. Vorzugsweise weisen alle Wände, das heißt die beiden Seitenwände, die Bodenwand und die obere Wand an ihrer plattformseitigen Kante das beschriebene plattformseitig offene U-Profil auf.

Zweckmäßigerweise verläuft das U-Profil über die gesamte Länge der jeweiligen plattformseitigen Kante bzw. verläuft das U-Profil über zumindest 90 Prozent dieser Länge. Dabei ist das U-Profil in Bezug auf die Länge der plattformseitigen Kante bevorzugt ohne Unterbrechung ausgeführt. Dass das U-Profil plattformseitig offen ausgebildet ist, meint, dass die Spitzen der U-Schenkel des U-Profils zur Plattform hin orientiert sind. Die Plattform weist jeweils ein dem U-Profil angepasstes Formschlusselement auf, das so ausgebildet ist, dass es formschlüssig von den U-Schenkeln und der U-Basis des U-Profils eingefasst wird. Nach bevorzugter Ausführungsform der Erfindung handelt es sich bei den Formschlusselementen der Plattform ebenfalls um U-Profile. Dabei ist die U-Basis dieser letztgenannten U-Profile den U-Schenkeln bzw. dem offenen U-Profil der jeweiligen Wand zugewandt. Bei Herstellung des Formschlusses zwischen der Wand (Seitenwand, Bodenwand oder oberer Wand) und der Plattform liegt dann also gleichsam U-Basis auf U-Basis und liegen die U-Schenkel auf den U-Schenkeln. Bei dem Formschlusselement kann es sich aber beispielsweise auch um ein im Querschnitt rechteckförmiges Profil handeln, das dann vorzugsweise von dem U-Profil der jeweiligen Wand überfasst wird.

Eine sehr bevorzugte Ausführungsform der erfindungsgemäßen Zähler- und/oder Verteilervorrichtung ist dadurch gekennzeichnet, dass die Rastelemente als Rastvertiefungen und in die Rastvertiefungen einfassende Rastvorsprünge ausgebildet sind. Vorzugsweise sind diese Rastelemente an den U-Profilen vorgesehen. Rastvertiefungen meint im Rahmen der Erfindung auch Rastlöcher, die also die entsprechende Wand des jeweiligen Bauelementes durchfassen. Bei den Rastvorsprüngen handelt es sich vorzugsweise um Rastsicken, die mit Sickenköpfen in die Rastvertiefungen bzw. Rastlöcher einfassen können.

Nach sehr bevorzugter Ausführungsform der Erfindung sind Rastelemente an den U-Schenkeln der U-Profile vorgesehen. Zweckmäßigerweise sind diese Rastelemente an den U-Schenkeln der U-Profile an den Seitenwänden und an der Bodenwand und/oder an der oberen Wand ausgebildet. Es liegt weiterhin im Rahmen der Erfindung, dass entsprechende Komplementär-Rastelemente an dem von einem U-Profil zu überfassenden Formschlusselement der Plattform vorgesehen sind. Dabei sind die Komplementär-Rastelemente vorzugsweise an den Seiten des Formschlusselementes ausgebildet, an denen die U-Schenkel des zugeordneten U-Profils anliegen. Wenn also das Formschlusselement der Plattform ebenfalls U-profilförmig ausgeführt ist, dann sind die Komplementär-Rastelemente an den U-Schenkeln dieses Formschlusselementes vorgesehen. Nach einer bevorzugten Ausführungsform der Erfindung sind Rastvorsprünge bzw. Rastsicken an den U-Schenkeln der U-Profile der Wände eingerichtet und sind Rastvertiefungen bzw. Rastlöcher an den zugeordneten Seiten des Formschlusselementes der Plattform ausgebildet, an denen die U-Schenkel des jeweiligen U-Profils einer Wand (Seitenwand, Bodenwand oder oberer Wand) anliegen. Es liegt im Rahmen der Erfindung, dass die Rastelemente jeweils über die Länge des U-Profils bzw. über die Länge des Formschlusselementes verteilt angeordnet sind.

Vorzugsweise weist eine Seitenwand an ihrer an die Bodenwand und/oder an die obere Wand angrenzenden Kante ein zumindest über den Großteil der Kantenlänge verlaufendes Verbindungselement auf, mit welchem Verbindungselement die Seitenwand befestigungsmittelfrei an der Bodenwand und/oder an der oberen Wand angeschlossen ist. Zweckmäßigerweise ist die Seitenwand über derartige Verbindungselemente sowohl an die Bodenwand als auch an die obere Wand angeschlossen. Vorzugsweise verläuft das Verbindungselement über die gesamte Kantenlänge der Kante der Seitenwand oder über zumindest 90 Prozent der Kantenlänge dieser Seitenwand. - Nach sehr bevorzugter Ausführungsform der Erfindung ist das Verbindungselement U-profilförmig ausgebildet und ist an der zugeordneten Kante der Bodenwand und/oder der oberen Wand ein U-profilförmiges Komplementär-Verbindungselement vorgesehen, wobei das U-profilförmige Verbindungselement in das U-profilförmige Komplementär-Verbindungselement eingreift und umgekehrt. Eingreifen meint dabei, dass das U-profilförmige Verbindungselement mit einem U-Schenkel in das U-Profil des Komplementär-Verbindungselementes eingreift und dass umgekehrt das Komplementär-Verbindungselement mit einem U-Schenkel in das U-Profil des Verbindungselementes eingreift. Der vorstehend erläuterte bevorzugte Aufbau der Seitenwände und der Bodenwand und/oder der oberen Wand erlaubt es, dass vorzugsweise zunächst die beiden Seitenwände auf der Plattform aufgesteckt werden können und dann im Anschluss daran die Bodenwand und/oder die obere Wand von vorne zwischen den Seitenwänden eingeschoben werden kann, wobei das Eingreifen von U-profilförmigem Verbindungselement und U-profilförmigem Komplementär-Verbindungselement verwirklicht wird.

Nach sehr bevorzugter Ausführungsform der Erfindung weisen die Seitenwände und weist die Bodenwand und/oder die obere Wand jeweils eine vorderseitige zur Plattform parallele Randfläche auf, wobei die Randfläche einer Seitenwand mit der Randfläche der Bodenwand und/oder mit der Wandfläche der oberen Wand über zumindest eine Rastverbindung verbunden ist. Dass die Randfläche vorderseitig angeordnet ist, meint, dass die Randfläche an der der Plattform gegenüber liegenden Vorderseite des Gehäuses bzw. der Vorrichtung angeordnet ist, an welcher Vorderseite sich zweckmäßigerweise eine Tür befindet. Die bevorzugten Randflächen bilden gleichsam einen vorderseitigen Rahmen für die vordere Öffnung der Vorrichtung bzw. des Gehäuses, welche Öffnung zweckmäßigerweise durch eine Tür verschlossen wird. Dass die Randflächen parallel zur Plattform angeordnet sind, meint auch, dass die Randflächen im Wesentlichen parallel zur Plattform angeordnet sind. Zweckmäßigerweise grenzen die Randflächen der Seitenflächen bündig bzw. formschlüssig an die Randflächen der Bodenwand und/oder der oberen Wand. Eine Rastverbindung zwischen der Randfläche einer Seitenwand und der Randfläche der Bodenwand und/oder der oberen Wand weist vorzugsweise Rastelemente auf, die als Rastvorsprünge und Rastvertiefungen ausgebildet sind. Beim Herstellen der Rastverbindung greift also ein in einer Randfläche vorgesehener Rastvorsprung in eine in der anderen Randfläche vorgesehene Rastvertiefung ein. Bevorzugt sind diese Rastelemente ebenso ausgebildet wie die weiter oben beschriebenen Rastelemente, die vorzugsweise an dem U-Profil bzw. an dem Formschlusselement vorgesehen sind.

Es liegt im Rahmen der Erfindung, dass an der rückseitigen Plattform zumindest zwei Befestigungsschienen vorgesehen sind, an denen Zählerkomponenten und/oder Verteilerkomponenten befestigt sind. Die Befestigungsschienen sind dabei an der rückseitigen Plattform befestigt. Nach dieser sehr bevorzugten Ausführungsform übernimmt die rückseitige Plattform allein die tragende Funktion für die Befestigungsschienen mit den Zähler- und/oder Verteilerkomponenten. Bei den Zählerkomponenten und den Verteilerkomponenten handelt es sich insbesondere um Stromzählerkomponenten und/oder Stromverteilerkomponenten.

Nachfolgend wird die Erfindung anhand einer lediglich ein Ausführungsbeispiel darstellenden Zeichnung näher erläutert. Es zeigen in schematischer Darstellung:
- **Fig. 1**: die erfindungsgemäße Vorrichtung in einem ersten Montagezustand,
- **Fig. 2**: einen Schnitt durch den Gegenstand nach Fig. 1 in vergrößerter Darstellung im verrasteten Zustand der Seitenwände,
- **Fig. 3**: den Gegenstand nach Fig. 1 in einem zweiten Montagezustand,
- **Fig. 4**: den Gegenstand gemäß Fig. 1 in einem dritten Montagezustand,
- **Fig. 5**: einen Schnitt durch den Gegenstand nach Fig. 4 in vergrößerter Darstellung und
- **Fig. 6**: einen Ausschnitt aus Fig. 4 in vergrößerter Darstellung.

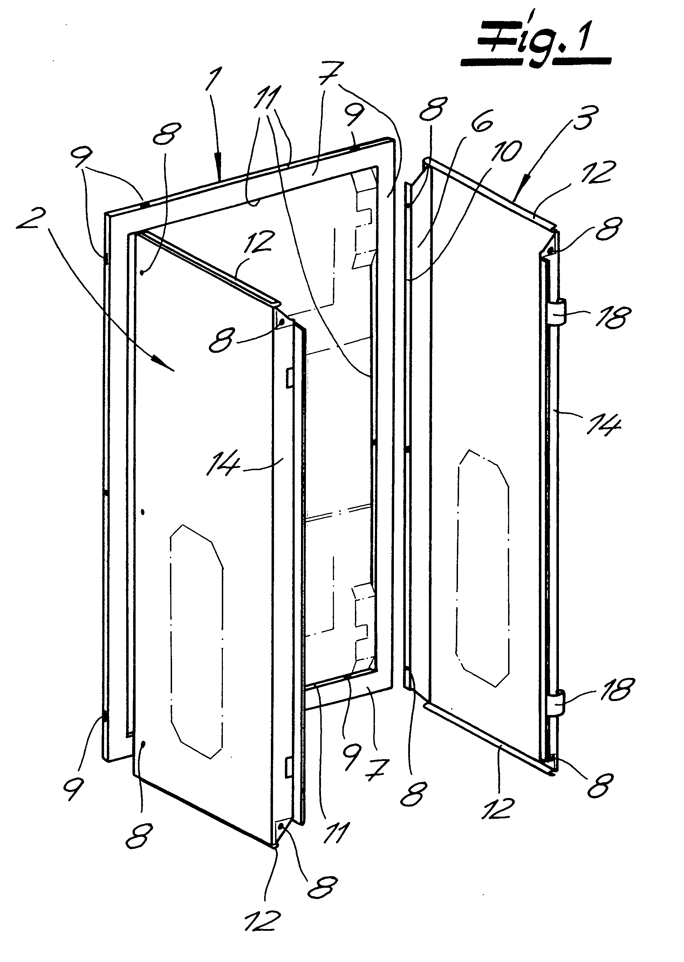

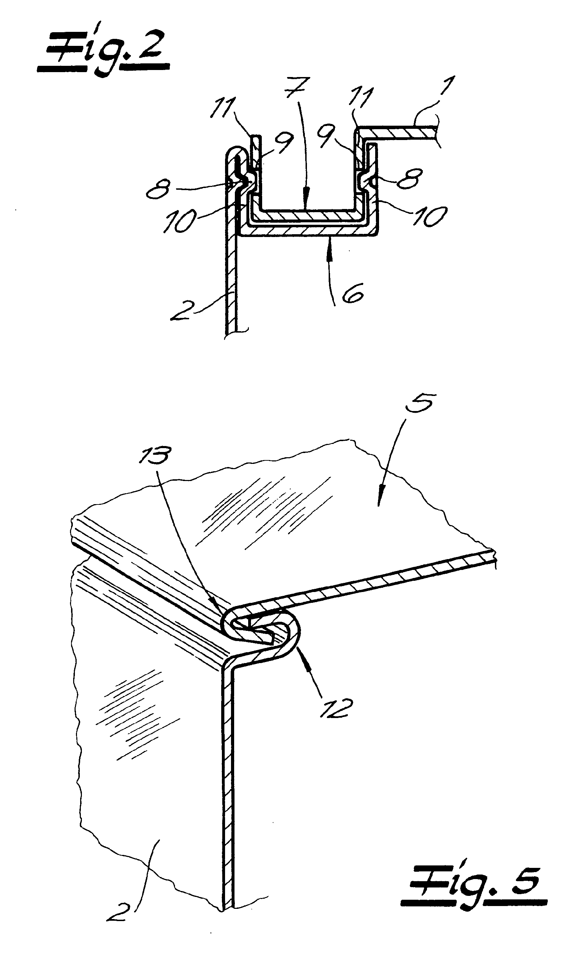

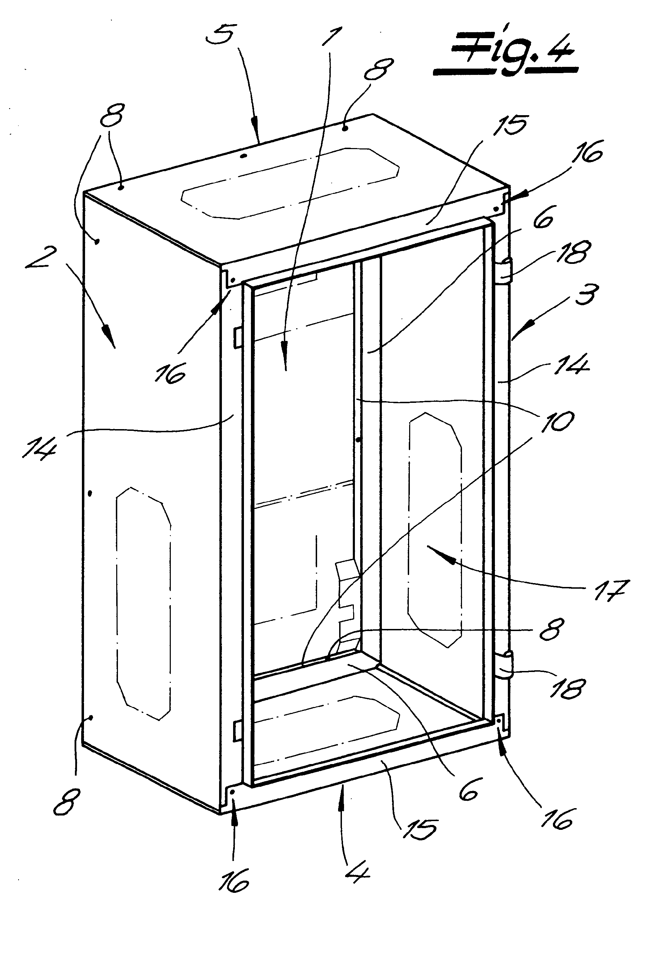

Die Erfindung betrifft eine Zähler- und/oder Verteilervorrichtung mit einer rückseitigen Plattform 1, zwei Seitenwänden 2, 3, einer Bodenwand 4 und einer oberen Wand 5 (siehe insbesondere Fig. 4). In Fig. 1 ist erkennbar, dass die beiden Seitenwände 2, 3 auf die Plattform 1 aufgesteckt werden. Dazu weisen die beiden Seitenwände 2, 3 an ihrer plattformseitigen Kante jeweils ein über die Länge der plattformseitigen Kante verlaufendes U-Profil 6 auf, das zur Plattformseite hin offen ist. Ein U-Profil 6 einer Seitenwand 2, 3 überfasst im montierten Zustand (siehe insbesondere Fig. 2) ein am Plattformrand verlaufendes Formschlusselement 7 formschlüssig. Vorzugsweise und im Ausführungsbeispiel ist auch das Formschlusselement 7 der Plattform 1 U-profilförmig ausgebildet. Sowohl an den U-Profilen 6 der Seitenwände 2, 3 als auch am Formschlusselement 7 der Plattform 1 sind Rastelemente 8, 9 vorgesehen und mittels dieser Rastelemente 8, 9 sind die Seitenwände 2, 3 über Rastverbindungen an die Plattform 1 angeschlossen (Fig. 2). Vorzugsweise und im Ausführungsbeispiel sind als Rastvorsprünge bzw. Rastsicken 8 ausgebildete Rastelemente an den U-Schenkeln 10 der U-Profile 6 der Seitenwände 2, 3 vorgesehen. Fernerhin sind zweckmäßigerweise und im Ausführungsbeispiel als Rastlöcher 9 ausgebildete Rastelemente (bzw. Komplementär-Rastelemente) an den Seitenflächen 11 der Formschlusselemente 7 der Plattform 1 vorgesehen, welche Seitenflächen 11 von den U-Schenkeln 10 überfasst werden. Die Rastsicken 8 greifen mit ihren Sickenköpfen in die Rastlöcher 9 ein und auf diese Weise wird eine funktionssichere Rastverbindung hergestellt. Die Rastsicken 8 sind vorzugsweise über die gesamte Länge eines U-Profils 6 verteilt und ebenso sind zweckmäßigerweise die Rastlöcher 9 über die gesamte Länge eines Formschlusselementes 7 verteilt.

Vorzugsweise und im Ausführungsbeispiel werden auch die Bodenwand 4 und die obere Wand 5 auf die rückseitige Plattform 1 einfach aufgesteckt. Wie die Seitenwände 2, 3 weist auch die Bodenwand 4 und die obere Wand 5 an ihrer plattformseitigen Kante jeweils ein über die Länge der plattformseitigen Kante verlaufendes U-Profil 6 auf, das plattformseitig offen ausgebildet ist. Das U-Profil 6 der Bodenwand 4 bzw. der oberen Wand 5 überfasst im montierten Zustand ein am entsprechenden Plattformrand verlaufendes Formschlusselement 7, das zweckmäßigerweise und im Ausführungsbeispiel ebenfalls U-profilförmig ausgebildet ist. Auch an dem U-Profil 6 der Bodenwand 4 und an dem U-Profil 6 der oberen Wand 5 sind wie an den entsprechend zugeordneten Formschlusselementen 7 der Plattform 1 Rastelemente 8, 9 vorgesehen. An den U-Schenkeln 10 der U-Profile 6 der Bodenwand 4 und der oberen Wand 5 sind Rastsicken 8 verwirklicht, die im montierten Zustand in Rastlöcher 9 einfassen, die an den Seitenflächen 11 der zugeordneten Formschlusselemente 7 vorgesehen sind. Insoweit werden zwischen Bodenwand 4 und Plattform 1 und zwischen oberer Wand 5 und Plattform 1 solche Rastverbindungen verwirklicht, wie sie für die Seitenwände 2, 3 in der Fig. 2 dargestellt sind. Vorzugsweise ist eine Mehrzahl von Rastsicken 8 über die Länge der U-Profile 6 der Bodenwand 4 und der oberen Wand 5 verteilt. Zweckmäßigerweise ist auch eine Mehrzahl von zugeordneten Rastlöchern 9 über die Länge der Formschlusselemente 7 der Plattform 1 verteilt. Bevorzugt und im Ausführungsbeispiel nach den Figuren sind Rastelemente 8, 9 bzw. vorzugsweise Rastsicken 8 an beiden gegenüber liegenden U-Schenkeln 10 der U-Profile 6 der Seitenwände 2, 3, der Bodenwand 4 und der oberen Wand 5 angeordnet. Dementsprechend sind zweckmäßigerweise Rastelemente 8, 9 bzw. bevorzugt Rastlöcher 9 an beiden gegenüber liegenden Seitenflächen 11 der Formschlusselemente 7 verwirklicht.

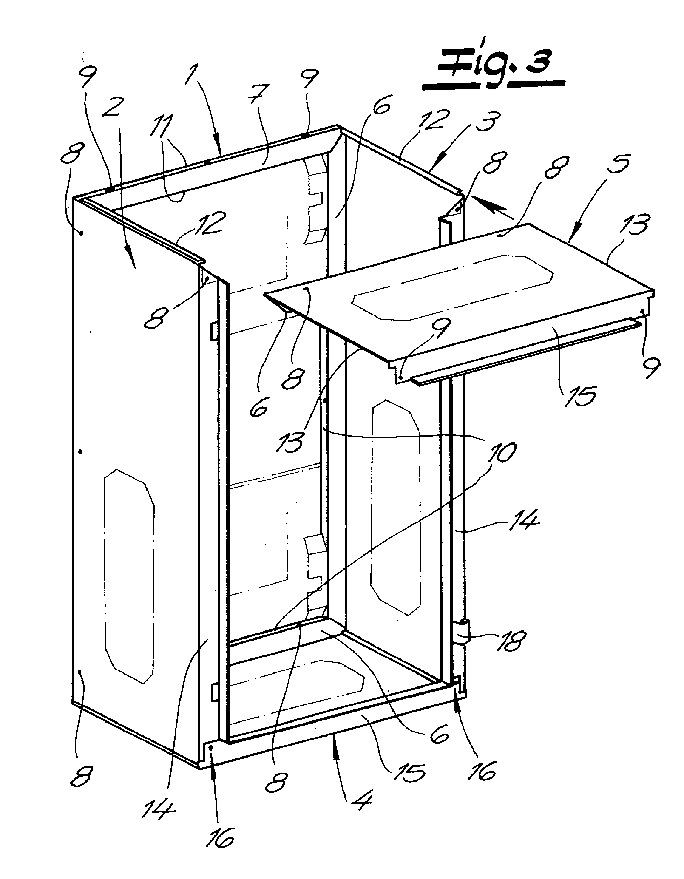

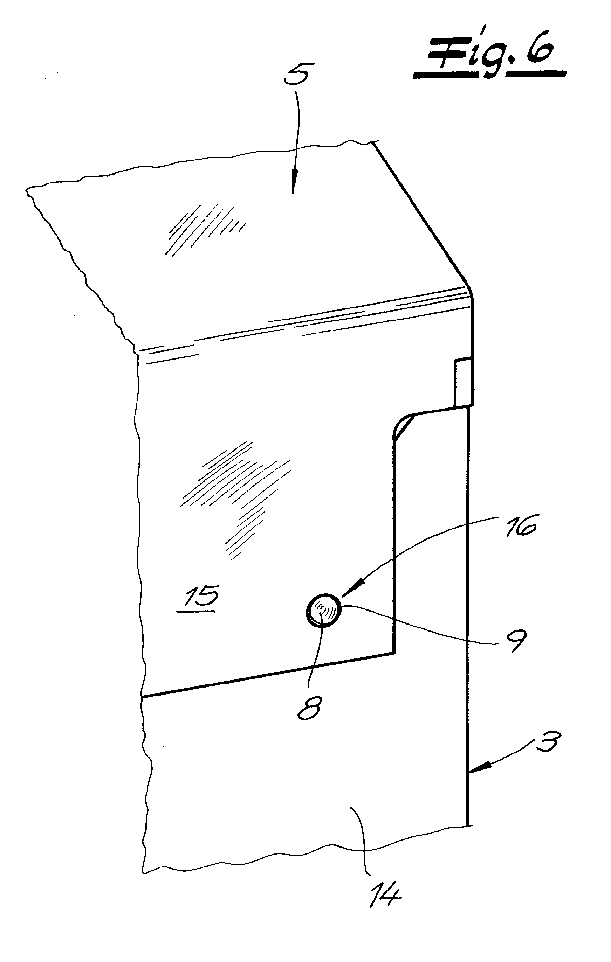

Nach sehr bevorzugter Ausführungsform und im Ausführungsbeispiel weist eine Seitenwand 2, 3 sowohl an der an die Bodenwand 4 angrenzenden Kante als auch an der an die obere Wand 5 angrenzenden Kante ein über die Kantenlänge verlaufendes U-profilförmiges Verbindungselement 12 auf. Mit diesem U-profilförmigen Verbindungselement 12 ist die Seitenwand 2, 3 befestigungsmittelfrei an die Bodenwand 4 bzw. an die obere Wand 5 angeschlossen. Hierzu weist die Bodenwand 4 bzw. die obere Wand 5 ein zugeordnetes U-profilförmiges Komplementär-Verbindungselement 13 auf. Im montierten Zustand greift das U-profilförmige Verbindungselement 12 einer Seitenwand 2, 3 mit einem U-Schenkel in das U-profilförmige Komplementär-Verbindungselement 13 einer Bodenwand 4 bzw. einer oberen Wand 5 ein und umgekehrt (siehe Fig. 5). Einer vergleichenden Betrachtung der Fig. 3 und 5 ist entnehmbar, dass bei bereits montierten Seitenwänden 2, 3 die Bodenwand 4 oder die obere Wand 5 von vorne gleichsam zwischen den Seitenwänden 2, 3 eingeschoben werden kann, wobei der Eingriff von Verbindungselement 12 und Komplementär-Verbindungselement 13 verwirklicht wird. Auf diese Weise kann ein sehr fester und nichtsdestoweniger befestigungsmittelfreier Verbund zwischen den Seitenwänden 2, 3 und der Bodenwand 4 bzw. der oberen Wand 5 hergestellt werden. In der Fig. 5 ist erkennbar, dass das U-profilförmige Verbindungselement 12 einer Seitenwand 2, 3 zur Gehäuseaußenseite hin als offenes U ausgebildet ist, während das U-profilförmige Komplementär-Verbindungselement 13 als zur Gehäuseinnenseite hin offenes U ausgebildet ist.

Nach bevorzugter Ausführungsform der Erfindung weisen die Seitenwände 2, 3 jeweils eine vorderseitige zur Plattform 1 parallele Randfläche 14 auf. Fernerhin ist vorzugsweise die Bodenwand 4 sowie die obere Wand 5 mit einer entsprechenden vorderseitigen zur Plattform 1 parallelen Randfläche 15 ausgestattet. Die Randfläche 14 einer Seitenwand 2, 3 ist dabei mit der Randfläche 15 der Bodenwand 4 oder mit der Randfläche 15 der oberen Wand 5 über einen Rastanschluss 16 verbunden. Der Rastanschluss 16 wird dabei vorzugsweise so verwirklicht wie die Rastverbindungen zwischen den U-Profilen 6 und den Formschlusselementen 7. Vorzugsweise weist also beispielsweise die Randfläche 15 der oberen Wand 5 (Fig. 6) ein Rastloch 9 auf, in das eine Rastsicke 8 der Randfläche 14 der Seitenwand 3 einfasst. Fig. 6 zeigt weiterhin, dass die Randflächen 14 und 15 formschlüssig bzw. bündig aneinander grenzen. - Es liegt im Rahmen der Erfindung, dass die vorderseitige Öffnung 17 der fertig montierten Vorrichtung bzw. des fertig montierten Gehäuses (Fig. 4) mit einer nicht dargestellten Tür verschließbar ist. Hierzu sind an der Seitenwand 3 Scharnierelemente 18 für den Anschluss einer solchen Tür vorgesehen.

## Patentansprüche

1. Zähler- und/oder Verteilervorrichtung mit einer rückseitigen Plattform (1), an welche Plattform (1) zwei Seitenwände (2, 3), eine Bodenwand (4) und eine obere Wand (5) angeschlossen sind,
wobei die beiden Seitenwände (2, 3) auf die Plattform (1) aufgesteckt sind und mittels an den Verbindungsstellen zwischen Seitenwänden (2, 3) und Plattform (1) vorgesehenen U-Profilen (6) formschlüssig an die Plattform (1) angeschlossen sind
und wobei sowohl an den Seitenwänden (2, 3) als auch an der Plattform (1) Rastelemente vorgesehen sind und die Seitenwände über Rastverbindungen an die Plattform (1) angeschlossen sind.

2. Zähler- und/oder Verteilervorrichtung nach Anspruch 1, wobei die Bodenwand (4) und/oder die obere Wand (5) auf die Plattform (1) aufgesteckt ist und mittels an den Verbindungsstellen zwischen Bodenwand (4) und/oder oberer Wand (5) und der Plattform (1) vorgesehenen U-Profilen (6) formschlüssig an die Plattform (1) angeschlossen ist
und wobei sowohl an der Bodenwand (4) und/oder an der oberen Wand (5) als auch an der Plattform (1) Rastelemente vorgesehen sind und die Bodenwand (4) und/oder die obere Wand (5) über Rastverbindungen an die Plattform (1) angeschlossen ist.

3. Zähler- und/oder Verteilervorrichtung nach einem der Ansprüche 1 oder 2, wobei die Seitenwände (2, 3) und/oder die Bodenwand (4) und/oder die obere Wand (5) an ihrer plattformseitigen Kante ein zumindest über einen Teil der Länge der plattformseitigen Kante verlaufendes plattformseitig offenes U-Profil (6) aufweisen, welches U-Profil (6) ein am entsprechenden Plattformrand verlaufendes Formschlusselement (7) formschlüssig überfasst.

4. Zähler- und/oder Verteilervorrichtung nach einem der Ansprüche 1 bis 3, wobei die Rastelemente als Rastvertiefungen und in die Rastvertiefungen einfassende Rastvorsprünge ausgebildet sind.

5. Zähler- und/oder Verteilervorrichtung nach einem der Ansprüche 1 bis 4, wobei Rastelemente an den U-Profilen (6), vorzugsweise an den U-Schenkeln (10) der U-Profile (8) vorgesehen sind.

6. Zähler- und/oder Verteilervorrichtung nach einem der Ansprüche 1 bis 5, wobei eine Seitenwand (2, 3) an ihrer an die Bodenwand (4) und/oder an die obere Wand (5) angrenzenden Kante ein zumindest über den Großteil der Kantenlänge verlaufendes Verbindungselement (12) aufweist, mit welchem Verbindungselement (12) die Seitenwand (2, 3) befestigungsmittelfrei an der Bodenwand (4) und/oder an der oberen Wand (5) angeschlossen ist.

7. Zähler- und/oder Verteilervorrichtung nach Anspruch 6, wobei das Verbindungselement (12) U-profilförmig ausgebildet ist, wobei an der zugeordneten Kante der Bodenwand (4) und/oder der oberen Wand (5) ein U-profilförmiges Komplementär-Verbindungselement (13) vorgesehen ist und wobei das U-profilförmige Verbindungselement (12) in das U-profilförmige Komplementär-Verbindungselement (13) eingreift und umgekehrt.

8. Zähler- und/oder Verteilervorrichtung nach Anspruch 7, wobei das U-profilförmige Verbindungselement (12) als zur Gehäuseaußenseite hin offenes U ausgebildet ist und das U-profilförmige Komplementär-Verbindungselement (13) als zur Gehäuseinnenseite hin offenes U ausgebildet ist.

9. Zähler- und/oder Verteilervorrichtung nach einem der Ansprüche 1 bis 8, wobei die Seitenwände (2, 3) und die Bodenwand (4) und/oder die obere Wand (5) jeweils eine vorderseitige zur Plattform (1) parallele Randfläche (14, 15) aufweisen und wobei die Randfläche (14) einer Seitenwand (2, 3) mit der Randfläche (15) der Bodenwand (4) und/oder mit der Randfläche (15) der oberen Wand (5) über zumindest einen Rastanschluss (16) verbunden ist.
